# EUROPEAN PATENT SPECIFICATION

(11) **EP 1 849 690 B1**
(45) Date of publication and mention of the grant of the patent: **14.08.2013**
(21) Application number: 06013516.7
(22) Date of filing: 29.06.2006
(51) Int. Cl.: B62J 1/00, B62J 1/18

(54) **Ventilative cycle saddle**
Belüfteter Fahrradsattel
Selle à ventilation pour bicyclette

(30) Priority: 26.04.2006 CN 200610078101
(43) Date of publication of application: 31.10.2007
(73) Proprietor: Velo Enterprise Co., Ltd., Dajia Township, Taichung County 437 (TW)
(72) Inventor: Yu, Tsai-Yun, Dajia Township Taichung County 437 (TW)
(74) Representative: Becker, Eberhard

(56) References cited:
- CN-Y- 2 579 770
- GB-A- 451 741
- GB-A- 518 753
- GB-A- 189 615 884
- JP-A- 2006 007 958
- US-A- 654 720
- US-A1- 2007 246 978

## Description

### BACKGROUND OF THE INVENTION

### 1. Field of the Invention

The present invention generally relates to a cycle saddle, particularly to a cycle saddle with ventilation function.

### 2. Description of the Related Art

The typical bicycle saddle generally consists of a base, a pad, and a cover. The base acts to impart rigidity and form to the saddle, the pad provides resilient support to the cyclist, and the cover provides a soft surface and protects the pad. A disadvantage of the typical bicycle saddle is that the cyclist suffers from high heat generated at the buttocks and inner thighs of the cyclist due to repeated frictional movements at the buttocks and the inner thighs of the cyclist. The cyclist sweats and thus feels uncomfortable and sometimes has rashes.

U.S. Pat. No. 654,720 refers to a bicycle saddle having a narrow front portion, a wide rear portion, and a center axis along the length direction thereof. The saddle comprises a base frame having a narrow front portion with first lower ventholes and a wide rear portion with second lower ventholes, said first and second lower ventholes lined up in at least a row along the center axis of said saddle; a pad covered on said base frame, said pad having a narrow front portion with first upper ventholes and a wide rear portion with second upper ventholes. The upper ventholes are arranged in such a way that each said upper venthole respectively corresponds to each said lower venthole to together define an air channel, whereby ambient air can flow through the whole areas of the saddle. The lower ventholes of said base frame are arranged in such a way that all of them are lined up to form a pair of mirrored rows centered by the center axis. Each of said lower venthole has a major axis with an extending line intersecting the center axis of said saddle with an including angle being less than ninety degrees.

U.S. Pat. No. 6,322,139 discloses a bicycle saddle for resolving the disadvantage of the typical bicycle saddle mentioned above. This saddle includes a recessed portion in an upper side thereof, the recessed portion including a bottom having at least one opening. A guide plate is mounted in the bicycle saddle and includes an inlet that faces a front of the bicycle saddle. The guide plate and the bottom of the recessed portion of the bicycle saddle together define a channel that communicates the inlet with the opening of the recessed portion of the bicycle saddle. A side vent is defined in each lateral side of the bicycle saddle. Thus, ambient air enters the recessed portion via the opening in the recessed portion and the side vents of the bicycle saddle during cycling to thereby provide a ventilation effect.

Such an improved saddle, as in practical use, was found that it can only partly solve the disadvantage of the typical bicycle saddle for the reason that there is no vent provided on the area of the saddle contacting with the buttocks of the cyclist during cycling. Thus, the cyclist still suffers from high heat generated at the buttocks of the cyclist.

Taiwan Utility Model Patent No. 553128 also discloses another improved saddle to resolve the disadvantage of the typical bicycle saddle mentioned above. The saddle herein still has a base, a pad and a cover. The upper surface of the base includes a plurality of recesses. Each recess has a hole provided on a side wall thereof. The pad has a plurality of openings to communicate with the holes provided on the base such that ambient air can flow through the saddle. Although such an improved saddle has better ventilation function than has the typical saddle but the rigidity of the saddle is largely decreased due to too many recesses and holes provided on the base thereof. Thus, the saddle herein can not steadily support the cyclist during cycling. In addition, the prior art saddles have another disadvantage that for unremovedly being covered on the base, the pad can not be replaced easily by cyclist himself as wear and tear.

### SUMMARY OF THE INVENTION

Accordingly, one aspect of the present invention that is different with the prior art is that the base and the pad are specially designed in such a way that both can define together a plurality of venting channels positioned on the whole area with which that the buttocks and inner thighs of the cyclist contacts during cycling. Furthermore, the venting channels of the present invention are contemplated to have superior ventilation function and will not weaken the original intensity of the saddle.

Another aspect of the present invention is to provide a cycle saddle that the pad thereof can be easily removed from or attached to the base thereof.

Therefore, the saddle of the present invention has a narrow front portion, a wide rear portion, and a center axis along the length direction thereof, said saddle comprising: a base frame having a narrow front portion with a plurality of first lower ventholes and a wide rear portion with a plurality of second lower ventholes, said first and second lower ventholes lined up in at least a row along the center axis of said saddle in such a way that all of them are lined up to form a pair of mirrored rows centered by the center axis, each of the lower ventholes having a major axis with an extending line intersecting the center axis of said saddle with an including angle; a pad covered on said base frame, said pad having a narrow front portion with a plurality of first upper ventholes and a wide rear portion with a plurality of second upper ventholes; and said first and second upper ventholes arranged in such a way that each said upper venthole respectively corresponds to each said lower venthole to together define an air channel, whereby ambient air can flow through the whole areas of the saddle that contact the buttocks and inner thighs of the cyclist during cycling to provide a better ventilation effect, characterized in that each said lower venthole is oval-shaped and that the including angle is 30 degrees.

The base frame of the saddle may be designed to have a perimeter edge with an opening channel. The pad of the saddle has a downwardly extending lip to be embedded into the channel of the base frame via the opening thereof when the pad is covered on the base frame.

### BRIEF DESCRIPTION OF THE DRAWINGS

FIG. 1 is a perspective view of a bicycle saddle made according to the present invention;
FIG. 2 is an exploded perspective view of the bicycle saddle of FIG. 1;
FIG. 3 is a top view of a base frame of the bicycle saddle of FIG. 1;
FIG. 4 is a bottom view of a base frame of the bicycle saddle of FIG. 1;
FIG. 5 is a sectional view of the base frame taken along line 5--5 of FIG. 2;
FIG. 6 is a sectional view of the base frame taken along line 6--6 of FIG. 2;
FIG. 7 is a bottom view of a pad of the bicycle saddle of FIG. 1;
FIG. 8 is a sectional view of the pad taken along line 8--8 of FIG. 2;
FIG. 9 is a sectional view of the pad taken along line 9--9 of FIG. 2; and
FIG. 10 is a sectional view of the bicycle saddle taken along line 10--10 of FIG. 1.

### DETAILED DESCRIPTION OF THE INVENTION

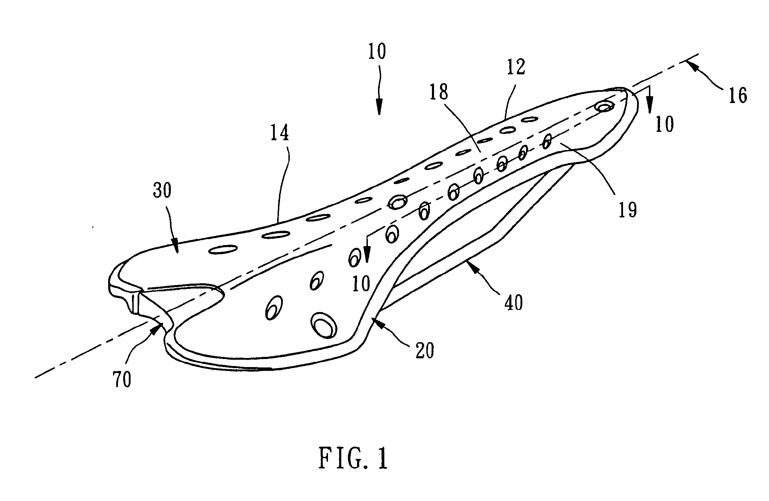

A bicycle saddle embodied according to the present invention is shown generally at **10** in FIG. 1.The bicycle saddle **10** has a narrow front portion **12** and a wide rear portion **14** extending backwardly from the front portion **12.** The saddle **10** has a center axis **16** along the length direction thereof. The front portion **12** has a raised longitudinal center portion **18** along the center axis **16** with side surfaces **19** that slope downwardly from the center portion **18** to a perimeter edge of the front portion **12.**

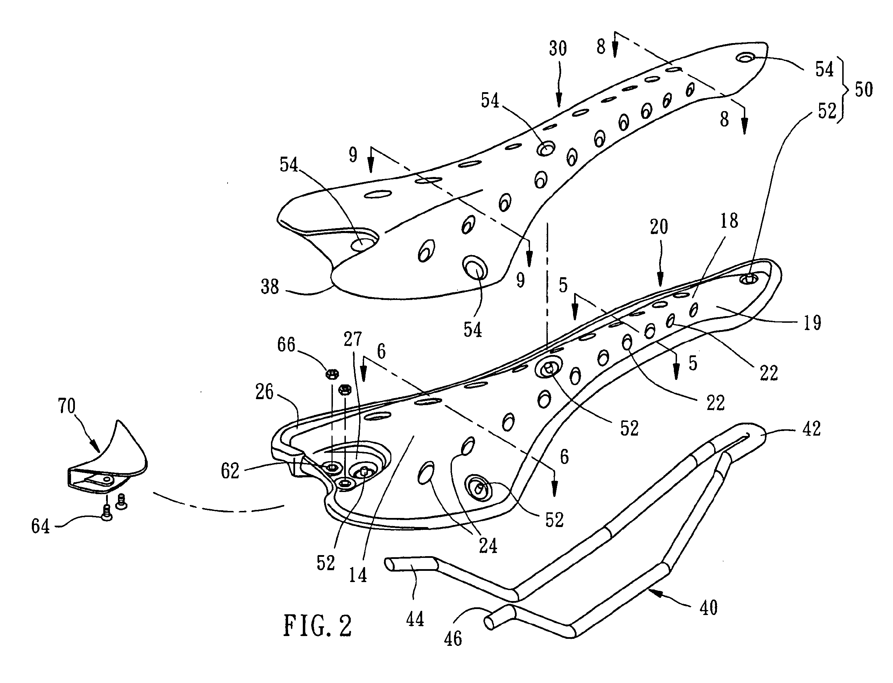

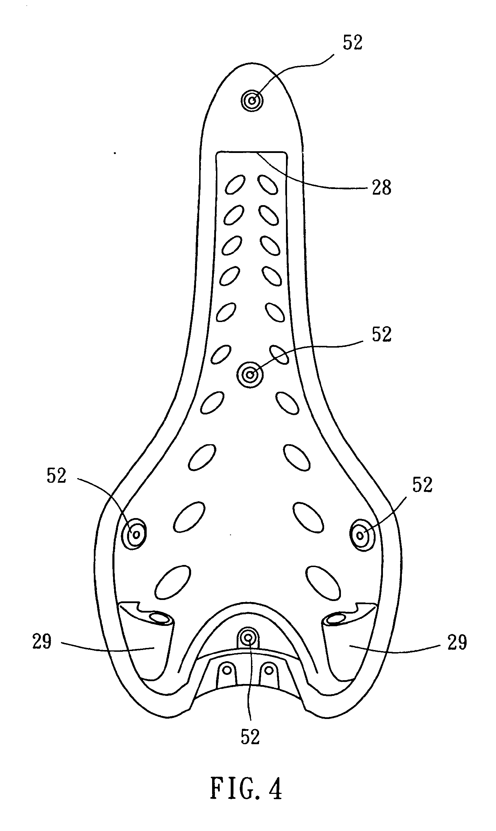

Referring to FIGS. 2-6, the bicycle saddle **10** includes a base frame **20,** a pad **30** and a mounting rod **40.** The base frame **20** is made of molded plastic, or any other lightweight, rigid materials, such as fiberglass or aluminum. The base frame **20** also has a front portion and a rear portion. The front portion is provided with a plurality of first lower ventholes **22** and the rear portion is provided with a plurality of second lower ventholes **24.** The first and second lower ventholes **22, 24** are arranged in such a way that all of them are lined up to form a pair of mirrored rows centered by the center axis **16.**

In other words, the first lower ventholes **22** are distributed in a pair of mirrored rows and each is located respectively on one of the side surfaces **19** of the saddle **10.** The rear portion **14** of the saddle is divided into two contacting surfaces by the center axis **16** of the saddle **10.** The second lower ventholes **24** are also distributed in a pair of mirrored rows and each is located respectively on one side of the rear portion **14** of the saddle **10.**

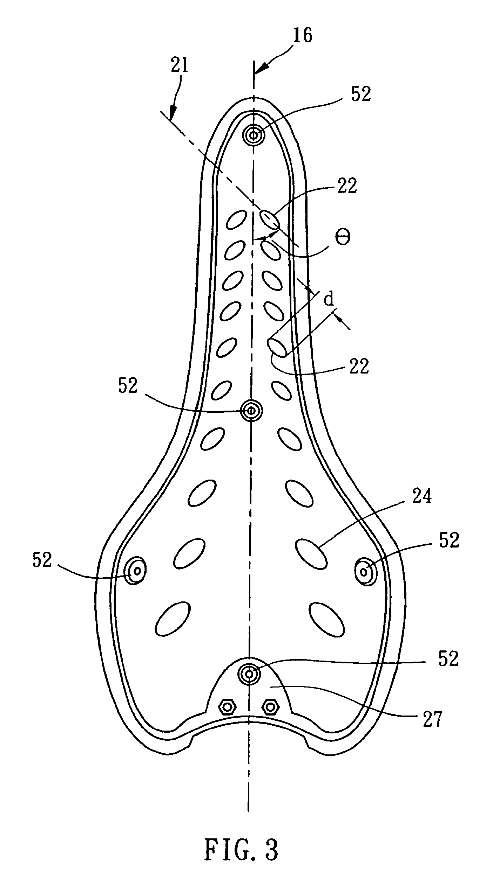

The lower venthole is designed to have a major axis **21** intersecting the center axis **16** of the saddle **10** with an included angle θ of 30 degrees, and is oval-shaped, as shown in FIG.3. In addition, the dimension of each lower venthole **22, 24** is also designed in such a way that the length of the major axis **21** is gradually increased from the front end of the saddle **10** to the rear end of the saddle **10.**

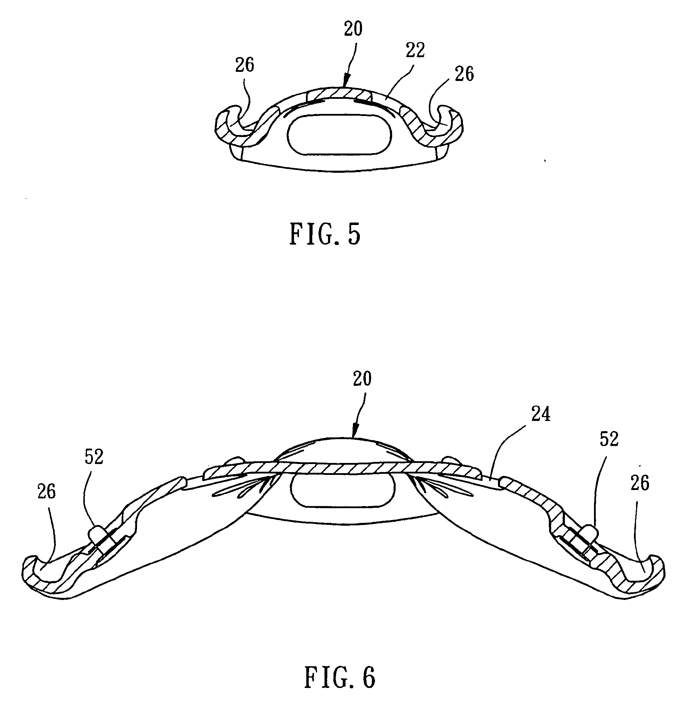

The base frame **20** further includes a perimeter edge with an opening channel **26** inclining to the inner side of the base frame **20,** as shown in FIG.5 and 6. The upper surface of the base frame **20** has a rear end with an arrow-shaped lower recess **27.** The lower surface of the base frame **20** has a front end with a receiving room **28** and a rear end with two apertures **29.**

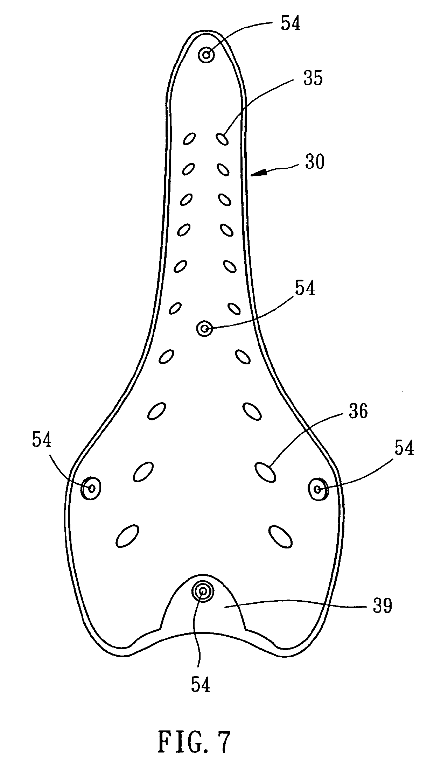

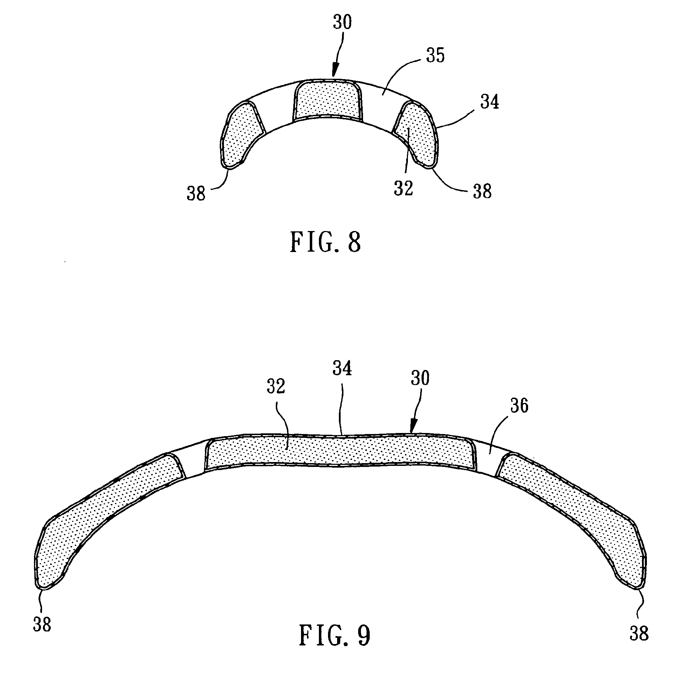

Referring now to FIGS. 7-9, the pad **30** is covered on the upper surface of the base frame **20**. The pad **30** has a body **32** made of resilient materials, such as plastic foams or gel, and a protective cover **34** made of soft and thin materials, such as cloths or non-woven cloths.

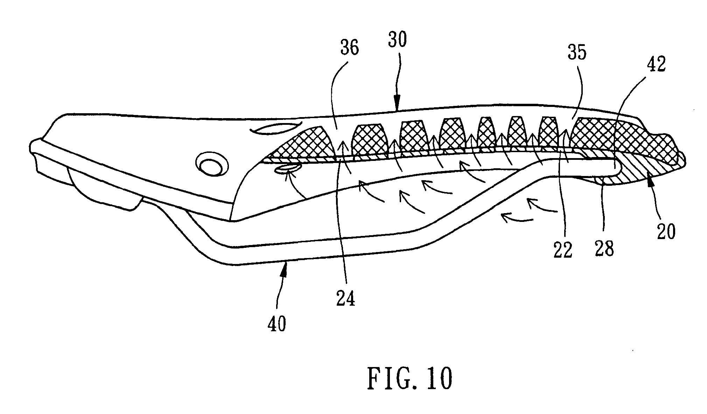

The pad **30** has a suitable thickness and a plurality of first and second upper ventholes **35, 36** arranged in such a way that each upper venthole is aligned respectively with one of lower ventholes to together define an air channel through the saddle **10**, as shown in FIG 10, whereby ambient air will flow through the saddle **10** via the air channels during cycling to provide ventilation function. Each upper venthole **35, 36** is also oval-shaped and has a major axis with a length thereof gradually increased from the front end of the saddle **10** to the rear end thereof. Moreover, the pad **30** has a downwardly extending lip **38** and an arrow- shaped upper recess **39.** When the pad **30** is covered on the base frame **20,** the lip **38** is embedded into the channel **26** from the opening thereof and the upper recess **39** is lodged in the lower recess **27.**

The mounting rod **40** has a U- shape closed end **42** and two parallel opened end **44**, **46** extending from the closed end **42.** In combination, the closed end **42** is received in the receiving room **28** and each opened end **44, 46** is inserted respectively into each aperture **29.**

For tightly attaching the pad **30** to the base frame **20,** the present invention further includes a fastening means **50** located between the pad **30** and the base frame **20.** In this embodiment, there are five sets of the fastening means **50** averagely distributed between the pad **30** and the base frame **20.** The fastening means **50** could be a button-and-hole arrangement. In other words, The fastening means **50** has a button member **52** mounted on the upper surface of the base frame **50** and a hole member **54** mounted on the lower surface of the pad **30** corresponding to the button member **52.** When the pad **30** is covered on the base frame **20,** the button member **52** and the hole member **54** will be buttoned together. Further, a screw-connecting means **60** is provided between the upper and lower recess 27, **39.** The screw-connecting means **60** includes a threaded hole **64** provided on the lower recess **27,** a bolt **64** and a nut **66.** A decorating clip **70** clips the upper and lower recess **39**, **27** together.

As the structure mentioned above, the areas of the saddle that would contact with the buttocks and inner thighs of the cyclist during cycling have air channels defined by the upper and lower ventholes such that ambient air can flow through the air channels during cycling to provide an excellent ventilation effect, as shown in FIG. 10.

Moreover, for having slope side surfaces **19** provided with a plurality of ventholes, the saddle **10** has no obstacles to resist ambient air flowing through the specified area of the saddle with that the buttocks of the cyclist contacts during cycling. Thus, the disadvantage of the prior art can be effectively eliminated.

In addition, the pad **30** is designed to have the downwardly extending lip **38** embedded into the opening channel **26** of the base frame **20,** and the pad and the base frame have five sets fastening means **50** arranged therebetween such that the saddle has the advantage that the pad thereof can be easily removed from or attached to the base frames thereof.

## Claims

1. A bicycle saddle (10) having a narrow front portion (12), a wide rear portion (14), and a center axis (16) along the length direction thereof, said saddle comprising:
a base frame (20) having a narrow front portion (12) with a plurality of first lower ventholes (22) and a wide rear portion (14) with a plurality of second lower ventholes (24), said first and second lower ventholes lined up in at least a row along the center axis (16) of said saddle in such a way that all of them are lined up to form a pair of mirrored rows centered by the center axis (16), each of the lower ventholes having a major axis (21) with an extending line intersecting the center axis (16) of said saddle with an including angle;
a pad (30) covered on said base frame (20), said pad (30) having a narrow front portion (12) with a plurality of first upper ventholes (35) and a wide rear portion (14) with a plurality of second upper ventholes (36); and
said first and second upper ventholes arranged in such a way that each said upper venthole respectively corresponds to each said lower venthole to together define an air channel, whereby ambient air can flow through the whole areas of the saddle that contact the buttocks and inner thighs of the cyclist during cycling to provide a better ventilation effect **characterized in that** each said lower venthole is oval-shaped and that the including angle is 30 degrees.

2. The bicycle saddle (10) as claimed in claim 1, wherein the dimension of each said lower venthole is designed in such a way that the length of the major axis (21) thereof is gradually increased from the front end of the saddle to the rear end of the saddle.

3. The bicycle saddle (10) as claimed in claim 1, wherein said base frame (20) has a perimeter edge with an opening channel (26) and said pad (30) has a downwardly extending lip (38) embedded in said channel of said base frame (20).

4. The bicycle saddle (10) as claimed in claim 1, further comprising a fastening means (50) located between said pad (30) and said base frame (20).

5. The bicycle saddle (10) as claimed in claim 4, wherein said fastening means has a button member (52) mounted on the upper surface of said base frame (20) and a hole member (54) mounted on the lower surface of said pad (30) corresponding to said button member.

## Patentansprüche

1. Fahrradsattel (10) mit einem schmalen Vorderabschnitt (12), einem breiten Hinterabschnitt (14), und einer Mittelachse (16) entlang der Längsrichtung davon, worin der Sattel umfasst:
einen Grundrahmen (20) mit einem schmalen Vorderabschnitt (12) mit mehreren ersten unteren Belüftungsöffnungen (22) und einem breiten Hinterabschnitt (14) mit mehreren zweiten unteren Belüftungsöffnungen (24), worin die ersten und zweiten unteren Belüftungsöffnungen in mindestens einer Reihe entlang der Mittelachse (16) des Sattels derart aufgereiht sind, dass alle aufgereiht sind ein Paar von der Mittelachse (16) zentrierte, gespiegelter Reihen zu bilden, worin jede der unteren Belüftungsöffnungen eine Hauptachse (21) mit einer Erweiterungslinie aufweist, die die Mittelachse (16) des Sattels mit einem Einschlusswinkel schneidet;
eine Abdeckung (30), die den Grundrahmen (20) bedeckt, worin die Abdeckung (30) einen schmalen Vorderabschnitt (12) mit mehreren ersten oberen Belüftungsöffnungen (35) und einen breiten Hinterabschnitt (14) mit mehreren zweiten oberen Belüftungsöffnungen (36) aufweist; und
worin die ersten und zweiten oberen Belüftungsöffnungen derart angeordnet sind, dass jeweils jede obere Belüftungsöffnung jeder unteren Belüftungsöffnung entspricht, um gemeinsam einen Luftkanal festzulegen, wodurch Umgebungsluft durch alle Bereiche des Sattels strömen kann, die während dem Fahrradfahren das Gesäß und die inneren Schenkelpartien des Fahrradfahrers kontaktieren, um eine verbesserte Ventilationswirkung bereitzustellen, **dadurch gekennzeichnet, dass** jede der unteren Belüftungsöffnungen eine ovale Form aufweist, und dass der Einschlusswinkel 30 Grad beträgt.

2. Fahrradsattel (10) nach Anspruch 1, worin die Abmessungen von jeder unteren Belüftungsöffnungen derart ausgestaltet ist, dass die Länge der Hauptachse (21) davon von dem vorderen Ende des Sattels zu dem hinteren Ende des Sattels schrittweise zunimmt.

3. Fahrradsattel (10) nach Anspruch 1, worin der Grundrahmen (20) eine Umfangskante mit einem Kanal (26) aufweist, und die Abdeckung (30) einen abwärts verlaufenden Rand (38) aufweist, der in den Kanal des Grundrahmens (20) eingebettet ist.

4. Fahrradsattel (10) nach Anspruch 1, ferner ein Befestigungsmittel (50) umfassend, das zwischen der Abdeckung (30) und dem Grundrahmen (20) angeordnet ist.

5. Fahrradsattel (10) nach Anspruch 4, worin das Befestigungsmittel ein Knopfelement (52), das auf der Oberfläche des Grundrahmens (20) befestigt ist, und ein Bohrungselement (54) aufweist, das dem Knopfelement entsprechend auf der Unterfläche der Abdeckung (30) befestigt ist.

## Revendications

1. Une selle de bicyclette (10) comprenant une partie avant étroite (12), une partie arrière large (14), et un axe central (16) le long de la direction longitudinale de celui-ci, ladite selle comprenant:
un cadre de base (20) ayant une partie avant étroite (12) avec une pluralité de premiers trous d'aération inférieurs (22) et une partie arrière large (14) avec une pluralité de deuxièmes trous d'aération inférieurs (24), lesdits premier et second trous d'aération inférieurs étant alignés en au moins une rangée le long de l'axe central (16) de ladite selle de façon telle qu'ils sont tous alignés pour former une paire de rangées miroirs centrées sur l'axe central (16), chacun des trous de ventilation comportant un axe principal (21) avec une ligne d'extension formant un angle avec l'axe central (16) de ladite selle ;
un coussin (30) recouvrant ledit châssis de base (20), ledit coussin (30) ayant une partie avant étroite (12) avec une pluralité de premiers trous d'aération supérieurs (35) et une partie arrière large (14) avec une pluralité de deuxièmes trous d'aération supérieurs (36) ; et
lesdits premier et deuxième trous d'aération supérieurs étant disposés de façon telle que chacun desdits trous de ventilation supérieurs correspond respectivement à chacun desdits trous de ventilation inférieurs pour définir ensemble un canal d'air où l'air ambiant peut circuler dans les zones entières de la selle qui sont au contact des fesses et des cuisses du cycliste lors du déplacement en bicyclette pour fournir un meilleur effet de ventilation **caractérisée en ce que** chacun desdits trous de ventilation inférieurs est de forme ovale et que l'angle d'inclinaison est de 30 degrés.

2. Selle de bicyclette (10) telle que revendiquée dans la revendication 1 dans laquelle la dimension de chacun desdits trous de ventilation inférieurs est conçue de telle manière que la longueur de l'axe principal (21) de celui-ci est progressivement augmentée de l'extrémité avant de la selle à l'extrémité arrière de la selle.

3. Selle de bicyclette (10) telle que revendiquée dans la revendication 1, dans laquelle ledit cadre de base (20) comporte un bord périphérique avec un canal d'ouverture (26) et ledit coussin (30) comporte une lèvre (38) s'étendant vers le bas, noyée dans ledit canal dudit cadre de base (20).

4. La selle de bicyclette (10) telle que revendiquée dans la revendication 1 comprenant en outre un moyen de fixation (50) situé entre ledit coussin (30) et ledit cadre de base (20).

5. Selle de bicyclette (10) telle que revendiquée dans la revendication 4, dans laquelle ledit moyen de fixation comporte un élément de bouton (52) monté sur la surface supérieure dudit cadre de base (20) et un élément creux (54) monté sur la surface inférieure dudit coussin (30) correspondant à l'élément de bouton.
